# EUROPEAN PATENT APPLICATION

(11) **EP 1 336 545 A1**
(43) Date of publication of application: **20.08.2003**
(21) Application number: 03002300.6
(22) Date of filing: 03.02.2003
(51) Int. Cl.: B62B 9/08

(54) **Stroller or baby carriage with improved wheel braking system**

(30) Priority: 15.02.2002 IT MI20020069
(71) Applicant: PEG PEREGO S.p.A., 20043 Arcore (Milano) (IT)
(72) Inventor: Perego, Gianluca, 20043 Arcore (MI) (IT)
(74) Representative: Faraggiana, Vittorio, Dr. Ing.

(57) **Abstract**

A stroller or baby carriage (10) is equipped with a frame (13) with a pair of rear wheel units (14) and a pair of front wheel units (15). One of said wheel unit pairs has its own first braking means (17) which can be applied through manual operating means (18). At least one wheel unit (15) of the other pair of wheel units also has its own second braking means (20) connected kinetically to the first braking means (17) to be operated as a consequence of the operation of said first braking means (17). Advantageously the wheel units (15) of the other pair are pivoting and the kinematic connection with the braking means is realized in a rotating manner to not obstruct the pivoting movement of said wheel units.

## Description

The present invention relates to a stroller or baby carriage having an improved wheel braking system.

Baby carriages or strollers of the prior art are generally equipped with four wheel-units of which only those nearest the pushing end are equipped with braking devices in general realized with a lever or foot operated pedal. The front wheel units have on the other hand wheels permanently free to rotate.

Such a braking system appears theoretically adequate for preventing uncontrolled movements of the stroller or baby carriage. But it was observed that the vehicle can still rotate around the braking wheels. In case of particular slopes of the street and/or relatively long distances between the front and rear wheels the rotation can even lead to overturning of the stroller or baby carriage. In particular, in in-line twin strollers, i.e. with two places arranged one behind the other, the length of the vehicle and the particular distribution of the weights can lead to very dangerous movements of the stroller and relatively high probability of overturning.

The general purpose of the present invention is to remedy the above mentioned shortcomings by making available a stroller or baby carriage equipped with a braking system for the wheels which would simply and economically allow avoidance of dangerous movements of the vehicle when braked.

In view of this purpose it was sought to provide in accordance with the present invention a stroller or baby carriage equipped with a frame with a pair of rear wheel units and a pair of front wheel units with one of said pairs of wheel units having its own first braking means to be applied through manual operating means characterized in that at least one wheel unit of the other pair of wheel units also has its own second braking means connected kinetically to the first braking means to be operated as a consequence of the operation of said first braking means.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic side elevation view of a 2-seat stroller realized in accordance with the principles of the present invention,
FIG 2 shows a diagrammatic cross section view of a first wheel unit of the stroller of FIG 1, and
FIG 3 shows a diagrammatic cross section view of a second wheel unit of the stroller of FIG 1.

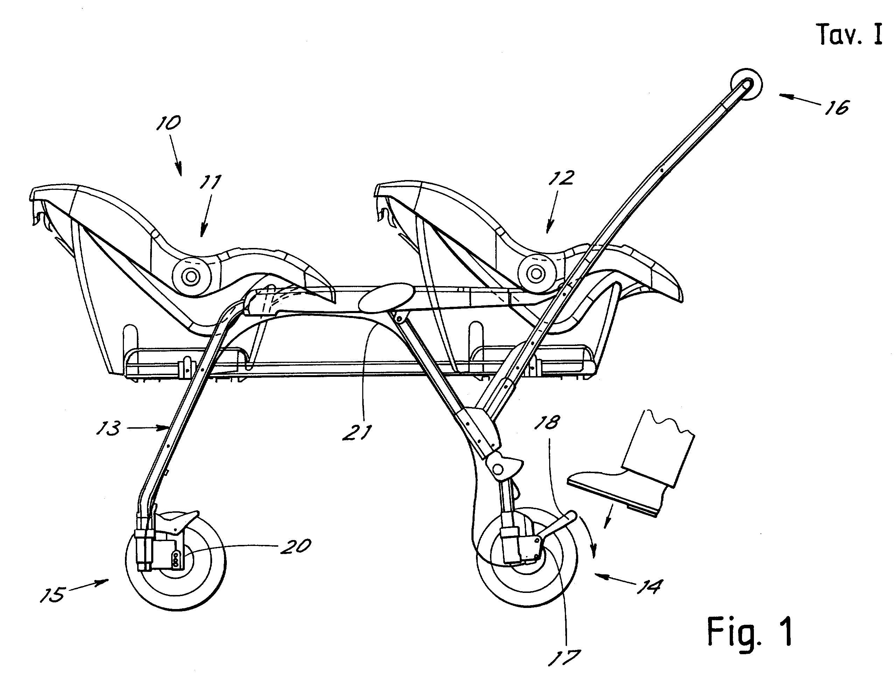

With reference to the figures, FIG 1 shows diagrammatically a stroller designated as a whole by reference number 10 applying the principles of the present invention. In particular, the stroller shown is the type with two in-line seats, i.e. with two seats 11, 12 mounted one behind the other. For those skilled in the art it is easy to imagine a stroller with a single seat or a one- or two-seat baby carriage. For example, the baby carriage could comprises the same frame 13 with an appropriate known gondola (not shown) in place of the seats 11, 12.

The stroller or baby carriage 10 has a frame 13 with a pushing handlebar 16, a pair of rear wheel units 14 and pair of front wheel units 15. In the figure can be seen one side of the vehicle with the other side being virtually specular and readily imaginable from the description supplied herein. In particular, the wheel units of each pair will be side-by-side and spaced by the width of the frame.

The frame can be the fixed or folding type in accordance with any known system.

The front wheel units 15 are advantageously of the pivoting type and rotate around a vertical axis to facilitate steering of the stroller or baby carriage.

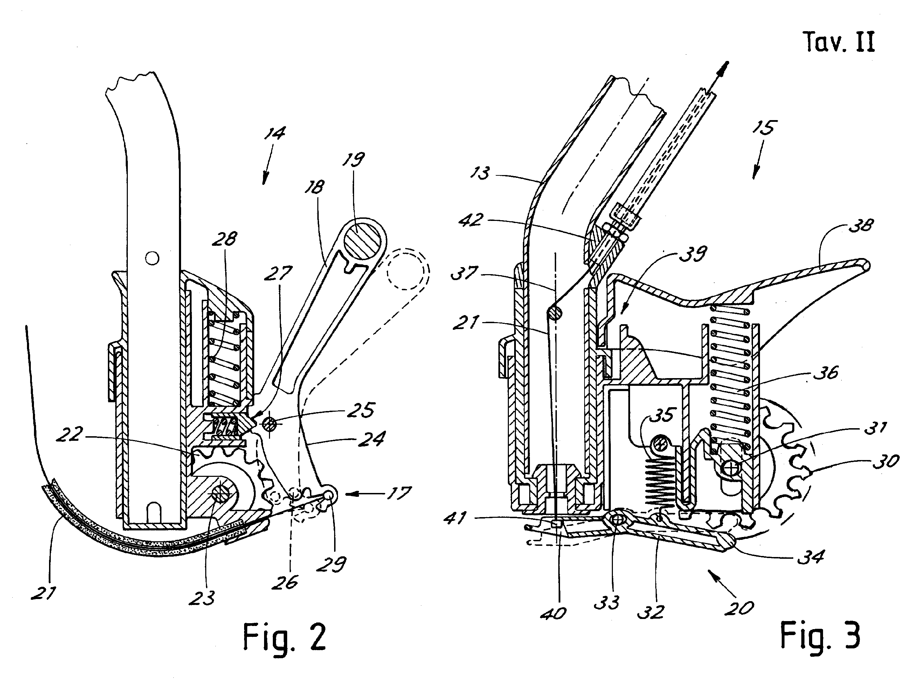

As may be seen in FIG 1, one of the wheel unit pairs - advantageously the rear one in FIG 1 - has its own first braking means 17 which can be operated through manual operating means to lock rotation of the wheel. The braking means advantageously comprise a lever 18 which extends to be applicable with the foot for easy locking and unlocking of the wheels. Again advantageously, the levers 18 of the two wheel units of the pair are interconnected by a handling bar parallel to the axis of the wheels for simultaneous operation of both braking means of the pair. The cross section of the bar 19 is shown in FIG 2 with the rest being easy to imagine.

As shown in detail below, at least one wheel unit of the other pair 15 of front wheel units also has its own second braking means 20 which are connected kinematically to the first braking means 17 to be operated as a consequence of the operation of the first braking means. Very advantageously, for operation of the second braking means 20 they are kinematically connected to the first braking means 17 through a tie rod with flexible cable 21 advantageously of the type running in a flexible sheath along the frame 13. This facilitates realization of folding frames or adaptation to the principles of the invention of known frames.

FIG 2 shows in greater detail the wheel unit 14 with the wheel removed for the sake of clarity. Both the wheel units 14 of the pair are realized with this structure. The first braking means 17 comprise a ring gear 22 integral with the rotation axis 23 of the wheel of the corresponding wheel unit and a lever 24 hinged at 25 to the wheel unit to move between a free wheel rotation position shown in solid lines in the figure and a braking position shown in broken lines in which it engages the teeth of the ring gear 22 with one of its pin ends 26 to lock its rotation. The manual operating means realized by the lever 18 comprise known release means 27 holding the lever steadily in the two positions of braking and free rotation. The end of the lever 24 opposed to the handling end 18 is connected at one end 29 of the cable 21 to release it when the lever is in locking position.

The entire wheel unit is supported in a sprung manner on the frame by means of a spring 28.

FIG 3 shows in greater detail the wheel unit 15 with the wheel removed for the sake of clarity. Both wheel units of the pair can be realized with this structure although it was found sufficient that only one of the two wheel units of the pair be realized with braking means to prevent the above mentioned disadvantages of the prior art.

The braking means 20 comprise a ring gear 30 integral with the wheel rotation axis 31 of the corresponding wheel unit and a lever 32 hinged to the wheel unit on a horizontal axis 33 to move between a free wheel rotation position shown in solid lines in the figure and a braking position shown in broken lines in which it engages with one end 34 the teeth of the ring gear 30 to lock rotation of the latter. The movement towards the free rotation position takes place against the action of a spring 35. The end of the lever 32 opposite the engagement end 34 is connected to the other end of the cable 21. In this manner, when the wheel unit 14 is braked and therefore the cable loosens the lever 32 moves into the locking position thanks to the action of the spring 35. This ensures that in case of breakage or loosening of the cable the unit 15 passes to the braked condition.

In addition to being sprung with respect to the frame thanks to a spring 36 the wheel units 15 pivot around a vertical axis 37 to realize steering wheel units. The pivoting wheel units comprise locking means 39 with operating lever 38 for locking on command the pivoting movement around the vertical axis so as to keep control of the four wheel units all parallel. The locking mechanism for the pivoting movement is in itself of a general type known and therefore readily imaginable on the basis of the drawings annexed hereto.

The wheel rotation braking system is realized to allow free rotation of the pivoting wheel unit around the axis 37 without mutual interference with the handling of the braking means.

For this purpose the lever 32 of the wheel unit is arranged below the wheel unit and to have the handling end 40 in a position normal to the vertical axis 37 passing through the axis 37 and connected to the end of the tie rod 21 virtually opposite said vertical axis and in a manner rotatable around it. To achieve free rotation, the cable 21 ends advantageously with a ball end 41 received in an appropriate seat in the lever.

Advantageously the tie rod has an end section running inside the tubular frame to reach the connection with the handling end of the lever 32. A passage 42 is made in the frame for the cable outlet and engagement of the terminal end of its sheath. The cable can thus run outside the frame while fastened thereto at appropriate points until it reaches the other wheel unit as may be seen in FIG 1. As an alternative the cable can of course run inside the frame up to near the other wheel unit.

It is now clear that the predetermined purposes have been achieved by making available a braking system allowing braking with a single manual action not only of the rear wheels but also of at least one front wheel - or both front wheels by duplicating the entire structure of the wheel units and tie rods on both sides - to prevent uncontrolled movements of the stroller or baby carriage under all conditions. In addition, the system in accordance with the present invention allows braking of pivoting wheels whatever their orientation.

Naturally the above description of an embodiment applying the innovative principles of the present invention is given by way of non-limiting example of said principles within the scope of the exclusive right claimed here. For example the frame structure and general shape of the stroller or baby carriage can differ from that shown depending on specific aesthetic and manufacturing exigencies.

## Claims

1. Stroller or baby carriage equipped with a frame (13) with a pair of rear wheel units (14) and a pair of front wheel units (15) with one of said pairs of wheel units having its own first braking means (17) applicable through manual operating means (18) **characterized in that** at least one wheel unit (15) of the other pair of wheel units also has its own second braking means (20) connected kinetically to the first braking means (17) to be operated as a consequence of the operation of said first braking means (17).

2. Stroller or baby carriage in accordance with claim 1 **characterized in that** for operation of the second braking means (20) they are kinematically connected to the first braking means (17) by means of a flexible cable tie rod (21).

3. Stroller or baby carriage in accordance with claim 1 **characterized in that** the braking means (17 and/or 20) comprise a ring gear (22,30) integral with the axis (23,31) of rotation of the wheel of the corresponding wheel unit and a lever (24,32) hinged to the wheel unit to move between a position of free rotation of the wheel and a braking position in which it engages the teeth of the ring gear to lock its rotation.

4. Stroller or baby carriage in accordance with claim 3 **characterized in that** the lever (32) of said at least one wheel unit of the other pair of wheel units is movable to the position of free rotation of the wheel against the action of a spring (35).

5. Stroller or baby carriage in accordance with claim 3 **characterized in that** the manual operation means comprises an extension (18) of the lever (24) of the corresponding wheel unit for manual handling of the lever around a horizontal axis (25) between the free rotation position and the wheel braking position.

6. Stroller or baby carriage in accordance with claim 5 **characterized in that** the manual operation means comprise snap means (27) for holding steady in the two positions of braking and free rotation.

7. Stroller or baby carriage in accordance with claims 2 and 3 **characterized in that** the cable (21) has each of its two ends (29,41) connected to one of the levers (24,32) of the respective wheel units of the two pairs so that the movement of one lever between the free position and the braking position corresponds to a corresponding movement of the other lever between the same two positions.

8. Stroller or baby carriage in accordance with claim 1 **characterized in that** the wheel units of said other pair (15) of wheel units pivot around a vertical axis (37) to realize a steering wheel unit.

9. Stroller or baby carriage in accordance with claim 8 **characterized in that** the pivoting wheel unit (15) comprises means (38,39) for manual locking of the movement around the vertical axis (37) to hold all the wheel units mutually parallel on command.

10. Stroller or baby carriage in accordance with claims 7 and 8 **characterized in that** the lever (32) of said at least one wheel unit (15) is hinged to the wheel unit transversely to said vertical axis (37) and is arranged to have one handling end (40) in a position normal to said vertical axis (37) with the handling end being connected virtually opposite said vertical axis (37) and in a manner rotatable around it with the flexible cable tie rod (21) in such a manner as to allow free rotation of the pivoting wheel unit around the axis (37) without mutual interference with the handling of the braking means (20).

11. Stroller or baby carriage in accordance with claim 10 **characterized in that** the tie rod (21) has at least one terminal section running inside the frame (13) to reach a rotating connection (41) with said handling end (40) of the lever.

12. Stroller or baby carriage in accordance with claim 10 **characterized in that** the lever (32) of said at least one wheel unit (15) is arranged in a position beneath the wheel unit.

13. Stroller or baby carriage in accordance with claim 1 **characterized in that** said pair of wheel units (14) with the first braking means (17) is the rear pair with the braking means (17) of both the wheel units (14) of said rear pair being interconnected together by a handling bar (19) parallel to the axis of the wheels for simultaneous handling of both the braking means of the pair.

14. Stroller or baby carriage in accordance with claim 1 **characterized in that** the wheel units (14,15) are mounted on the frame in a sprung manner.

15. Stroller or baby carriage in accordance with claim 1 **characterized in that** it comprises two seats (11,12) aligned one behind the other.
